# EUROPÄISCHE PATENTSCHRIFT

(11) **EP 0 482 015 B1**
(45) Veröffentlichungstag und Bekanntmachung des Hinweises auf die Patenterteilung: **30.03.1994**
(21) Anmeldenummer: 90909331.2
(22) Anmeldetag: 20.06.1990
(51) Int. Cl.: B60R 21/32

(54) **INSASSEN-SICHERHEITSSYSTEM FÜR FAHRZEUGE**
SAFETY SYSTEM FOR VEHICLE OCCUPANTS
DISPOSITIF DE SECURITE POUR LES OCCUPANTS D'UN VEHICULE

(30) Priorität: 08.07.1989 DE 3922506
(43) Veröffentlichungstag der Anmeldung: 29.04.1992
(73) Patentinhaber: ROBERT BOSCH GMBH, 70442 Stuttgart (DE)
(72) Erfinder: TAUFER, Peter, D-7253 Renningen 2 (DE); JEENICKE, Edmund, D-7141 Schwieberdingen (DE); BALZER, Knut, D-7140 Ludwigsburg-Pflugfelden (DE)
(86) Internationale Anmeldenummer: DE9000466
(87) Internationale Veröffentlichungsnummer: WO9100813

(56) Entgegenhaltungen:
- EP-A- 11 680
- EP-A- 0 402 622
- DE-A- 3 001 780
- DE-A- 3 816 591
- FR-A- 2 291 064
- FR-A- 2 345 317

## Beschreibung

### Stand der Technik

Die Erfindung betrifft ein Insassen-Sicherheitssystem für Fahrzeuge, insbesondere ein Rückhaltesystem, wie Airbag, Gurtstraffer usw., nach der Gattung des Hauptanspruchs.

Fahrzeuge, insbesondere Personenkraftwagen, werden zunehmend mit Insassen-Sicherheitssystemen ausgestattet, die im Kollisionsfall oder dergleichen den Insassen einen Schutz vor Verletzungen bieten. Insbesondere ist hier das aus der Zeitschrift ATZ 84 (1982)2, S. 77 - 83 bekannte Airbag-System zu erwähnen. Bei derartigen Systemen sind Fehlauslösungen unbedingt zu vermeiden, da diese große Gefahren mit sich bringen. Eine ungewollte Airbagauslösung nimmt nicht nur dem Fahrer des Personenkraftwagens zumindest für eine gewisse Zeitspanne die Sicht, sondern führt auch - unter anderem durch die einhergehende Geräuschentwicklung - zu einem Erschrecken des Fahrers, so daß dessen Reaktionsvermögen kurzzeitig ausfällt, zumindest aber begrenzt ist. Hinzu tritt, daß ein Airbag nach Auslösen nicht wieder zu verwenden ist. Eine Neuinstallation des Systems läßt erhebliche Kosten entstehen.

Zwei wesentliche Kriterien, die in den genannten elektronischen Rückhaltesystemen zu Fehlauslösungen führen können, sind nichtdefinierte Hardware-Zustände während des Ein- und Ausschaltens z. B. eines Auslösesensors sowie Fehlfunktionen oder Störungen in einer Recheneinheit, die eine Zündendstufe des Sicherheitssystems ansteuert. Beim Ein- und Ausschalten des Auslösesensors durchläuft die zugehörige Versorgungsspannung den gesamten Spannungsbereich. Hierdurch können Zustände auftreten, in denen z. B. integrierte Schalterkeise des Auslösesensors keine definierte Funktion aufweisen, so daß es zu einer Fehlauslösung kommen kann. Die genannten Fehlfunktionen oder Störungen der Recheneinheit führen ebenfalls zu nichtdefinierten Zuständen, so daß eine ungewollte Ansteuerung der Zündendstufe des Sicherheitssystems auftreten kann.

Aus der nicht vorveröffentlichten EP-A1 0 402 622 ist eine Zündeinrichtung für Schutzvorrichtungen in Fahrzeugen bekannt, die ein pyroelektrisches Zündelement umfaßt, dem ein elektronisches Schloß 4 und ein die Bestromung des Zünders freigebender, gesteuerter Schalter zugeordnet sind. Nur nach Übertragung eines Entriegelungssignals führt eine Beaufschlagung mit einem Zündsignal zur Bestromung des Zündelements, wodurch eine ungewollte Zündauslösung, z. B. durch versehentliche Beaufschlagung der Anschlüsse der Zündeinrichtung mit einer Fremdspannung, sicher verhindert wird. Die Übertragung des Entriegelungssignals führt dabei zeitverzugslos zu einer Betätigung des gesteuerten Schalters 3 und damit zu einer Freigabe der Zündeinrichtung.

### Vorteile der Erfindung

Das erfindungsgemäße Insassen-Sicherheitssystem mit den im Hauptanspruch genannten Merkmalen hat demgegenüber den Vorteil, daß durch eine von der Recheneinheit angesteuerte Sperrschaltung eine Verriegelung der Zündendstufe vorgenommen und dadurch eine Fehlauslösung vermieden wird. Die Sperrschaltung entriegelt erst nach Ablauf einer vorgebbaren Verriegelungs-Freigabezeit die Zündendstufe, wobei die Verriegelungs-Freigabezeit kleiner als eine Ansprechzeit des Auslösesensors ist. Der elektronische Auslösesensor erfaßt bestimmte Fahrzustandsgrößen und führt bei Erfüllung vorgebbarer Kriterien zu einer Auslösung des Insassen-Sicherheitssystems. Der Auslösesensor kann beispielsweise die Fahrzeugbeschleunigung erfassen und diese in einer oder mehreren digitalen oder analogen Rechenschaltungen verarbeiten, insbesondere eine Aufintegrierung vornehmen. Wird dabei eine bestimmte Größe überschritten, so erfolgt die Auslösung. Hieraus ist ersichtlich, daß aufgrund des Integriervorganges keine sofortige Auslösung des Systems, sondern daß diese erst nach der genannten Ansprechzeit erfolgt. Für eine sichere Schutzfunktion, das heißt, einer Aktivierung des Insassen-Sicherheitssystems vor dem Auftreten von Beschleunigungswerten, die bei den Insassen zu Verletzung führen können, darf die Verriegelungs-Freigabezeit eine bestimmte Zeitspanne nicht überschreiten. Insbesondere ist es erforderlich, daß der vom Auslösesensor kommende Auslöseimpuls der entriegelten Zündendstufe zugeleitet wird, damit eine Systemaktivierung erfolgen kann. Mithin muß bis zu diesem Zeitpunkt die erfindungsgemäße Verriegelungs-Freigabezeit bereits abgelaufen sein. Diese ermöglicht es jedoch, den vorliegenden Zustand des Sicherheitssystems auf seinen korrekten Betriebszustand zu untersuchen. Insbesondere kann geprüft werden, ob sich die elektronischen Baueinheiten des Auslösesensors und der Recheneinheit jeweils im korrekten Zustand befinden, so daß jeweils die gewünschte, definierte Funktion vorliegt. Im Normalbetrieb ist somit aufgrund der Sperrschaltung eine dauernde Verriegelung der Zündendstufe gegeben, die erst dann, wenn zu einem bestimmten Zeitpunkt eine gewollte Auslösung des Insassen-Sicherheitssystem erfolgen soll, so frühzeitig aufgehoben wird, daß bis zum eigentlichen Zündzeitpunkt die Zeitverzögerung (Verriegelungs-Freigabezeit) abgelaufen ist. Tritt -wie gesagt- während des Normalbetriebs ein Störfall in der Recheneinheit auf, was zu einer unzulässigen Ansteuerung der Zündendstufe führen würde, so ist durch die erfindungsgemäße zeitverzögerte Freigabe noch für eine gewisse Zeitspanne ein "rettendes Eingreifen" möglich. Dieses kann beispielsweise dadurch geschehen, daß eine weitere, nicht gestörte Recheneinheit (vorzugsweise ein Mikrocomputer) den Störfall der fälschlich stimmulierten Recheneinheit erkennt und rechzeitig innerhalb der Verriegelungs-Freigabezeit eine Auslösung des Insassen-Sicherheitssystems unterbindet, indem das gesamte System in den Reset-Zustand versetzt wird.

Vorzugsweise ist die Verriegelungs-Freigabezeit größer als eine Intervallzeit einer Überwachungsschaltung. Diese kann insbesondere durch eine weitere Recheneinheit und/oder eine Fenster-Wachtdog-Schaltung oder dergleichen gebildet sein. Im Falle z. B. einer Fenster-Wachtdog-Schaltung ist vorgesehen, daß deren Zeitintervall für die Überwachung kleiner ist, als die Verriegelungs-Freigabezeit, wobei die Fenster-Watchdog-Schaltung die Zündendstufe direkt verriegelt und für eine Sperrzeit verriegelt hält.

Nach einer Weiterbildung der Erfindung ist eine Unterspannungserkennungsschaltung Vorgesehen, die bereits bei einem Bruchteil der Nennversorgungsspannung des Sicherheitssystems arbeitet und die Zündendstufe solange verriegelt, bis die Versorgungsspannung eine die Funktionsfähigkeit der gesamten Schaltungsanordnung sicherstellende Schwelle überschritten hat. Störungen in der Spannungsversorgung, die zu undefinierten Zuständen der Recheneinheit führen können, führen aufgrund der erfindungsgemäßen Sperrschaltung nicht zu einem unerwünschten Auslösen des Sicherheitssystems. Aufgrund der Unterspannungserkennungsschaltung wird insbesondere auch beim Ein- und Ausschalten des Systems verhindert, daß durch das Ansteigen bzw. Abfallen der Versorgungsspannung in den integrierten Schaltkreisen auftretende, undefinierte Zustände eine Auslösung des Sicherheitssystems bewirken können. Dies erfolgt durch die genannte Zündendstufen-Verriegelung, die erst dann aufgehoben wird, wenn die Versorgungsspannung größer als die vorgebbare Schwelle ist.

Überdies kann vorgesehen sein, daß die Unterspanninngserkennungsschaltung die Verriegelung der Zündendstufe solange aufrecht erhält, bis von dem Zeitpunkt des Überschreitens der Schwelle eine vorgebbare Sperrzeit abgelaufen ist. Mithin sorgt diese Sperrzeit nach Wiederherstellung eines hinreichenden Spannungspotentials dafür, daß ein Zeitraum zur Verfügung steht, in dem eine Überprüfung des Betriebszustandes erfolgen kann. Werden undefinierte Zustände oder Funktionen ermittelt, so können diese aufgrund der Verriegelung der Zündendstufe nicht zu einer Fehlauslösung des Sicherheitssystems führen.

Vorteilhaft ist es, wenn nach Ablauf der Sperrzeit die Recheneinheit die durch die Sperrschaltung bewirkte Zündendstufen-Verriegelung übernimmt. Die Unterspannungserkennungsschaltung sorgt während einer Unterspannungsphase der Versorgungsspannung für eine Verriegelung der Zündendstufe. Dieses gilt auch -aufgrund der Sperrzeit- für eine gewisse Zeitspanne nach Wiederherstellung eines hinreichenden Spannungspotentials. Anschließend wird dann die Verriegelung der Zündendstufe von der Recheneinheit in Verbindung mit der erfindungsgemäßen Sperrschaltung übernommen, so daß stets eine Verriegelung der Zündendstufe gewährleistet ist und somit wirkungsvoll einer Fehlauslösung begegnet wird. Erst im Falle einer gewollten Auslösung des Sicherheitssystems wird die Verriegelung der Zündendstufe unter Einhaltung der erfindungsgemäßen Zeitbedingung aufgehoben, so daß bis zu diesem Zeitpunkt eine hohe Sicherheit im Hinblick auf eine Fehlauslösung vorliegt.

Nach einer Weiterbildung der Erfindung weist die Recheneinheit einen die Sperrschaltung ansteuernden Sperranschluß auf. Die Recheneinheit besitzt ferner einen Reset-Eingang, wobei sie beim Anlegen eines Reset-Impulses an diesen Reset-Eingang den Sperranschluß in seinen Verriegelungszustand versetzt, so daß ein Ansprechen der Zündendstufen nicht möglich ist.

Insbesondere kann vorgesehen sein, daß der Sperranschluß mit einem Interruptanschluß der Recheneinheit verbunden ist. Sofern der Sperranschluß einen Zustand annimmt, der zur Aufhebung der Verriegelung der Zündendstufe führt, kann durch die Ansteuerung des Interruptanschlusses sofort eine Überprüfungsroutine gestartet werden, die aufdeckt, ob das Freigeben der Zündendstufenverriegelung begründet erfolgt ist. Beispielsweise kann über den Interruptanschluß ein bestimmtes Prüfprogramm gestartet oder auf eine bestimmte Programmstelle gesprungen werden, wodurch die genannte Prüfung eingeleitet wird.

Der Ausgang der Unterspannungserkennungsschaltung ist -nach einer Weiterbildung der Erfindung- mit dem Reset-Eingang der Recheneinheit verbunden. Hierdurch ist gewährleistet, daß beim Vorliegen von Störungen aufgrund eines Unterspannungszustandes keine Fehlauslösungen erfolgt.

Vorteilhaft ist eine Fenster-Watchdog-Schaltung, die von der Recheneinheit in bestimmten Zeitabständen getriggert wird. Diese ist mit dem Reset-Eingang der Recheneinheit verbunden. Sofern die Recheneinheit innerhalb der Zeitfenster-Folge eine Ansteuerung der Fenster-Watchdog-Schaltung vornimmt, wird die Abgabe eines Reset-Impulses unterdrückt. Entfallen die Triggerimpulse, z.B. aufgrund eines "Hängenbleibens" im Programmablauf, oder treten Triggerimpulse auf, die außerhalb der Zeitfenster liegen, so gibt die Fenster-Watchdog-Schaltung einen Reset-Impuls an den Reset-Eingang der Recheneinheit ab, wodurch eine Rücksetzung erfolgt. Hierdurch wird die Zündendstufe in ihren Verriegelungszustand versetzt. Außerdem ist überdies eine direkte Zündendstufen-Verriegelung vorgesehen, um mögliche Defekte im Reset-Zweig abzudecken.

Vorzugsweise weist die Sperrschaltung einen Komparator auf, dessen einer, erster Eingang an einer Referenzspannung liegt und dessen anderer, zweiter Eingang über einen Verbindungspunkt an den Sperranschluß angeschlossen ist. An den Verbindungspunkt ist ferner eine von der Versorgungsspannung gespeiste Zeitkonstanten-Schaltung angeschlossen. Diese besteht aus einem R/C-Glied, dessen Widerstand zwischen den einen Pol der Versorgungsspannung und den Verbindungspunkt und dessen Kondensator zwischen den anderen Pol der Versorgungsspannung und den Verbindungspunkt geschaltet ist. Der Ausgang des Komparators ist an eine die Endstufe ansteuernde Verriegelungsschaltung angeschlossen. Der Kondensator C des R/C-Glieds wird über den Widerstand R von der Versorgungsspannung aufgeladen. Bei einem Reset-Impuls am Reset-Eingang der Recheneinheit oder während des Normalbetriebes (bei dem keine Auslösung des Sicherheitssystems erfolgt) liegt der Sperranschluß der Recheneinheit auf einem Potential (vorzugsweise Masse), bei dem sich der Kondensator zumindest soweit entlädt, daß seine Spannung kleiner als die Referenzspannung ist. Hierdurch schaltet der Komparator in einen Zustand, der eine Verriegelung der Zündendstufe herbeiführt. Der Ausgang des Komparators kann erst in einen Zustand umschalten, der eine Aufhebung der Verriegelung der Zündendstufe hervorruft, wenn der an seinem zweiten Eingang angeschlossene Kondensator über den Widerstand des R/C-Gliedes von der Versorgungsspannung auf ein Potential aufgeladen ist, daß größer als die an seinem ersten Eingang liegende Referenzspannung ist. Über die Zeitkonstante des R/C-Gliedes läßt sich somit die Umschaltzeit festlegen. Diese Umschaltzeit entspricht der erfindungsgemäßen Verriegelungs-Freigabezeit, da bei einem Umschalten des Komparators der dann an seinem Ausgang liegende Spannungspegel eine Entriegelung der Zündendstufe herbeiführt.

Der Komparator ist über eine Verriegelungsschaltung mit der Zündendstufe verbunden. Die Verriegelungsschaltung weist vorzugsweise ein steuerbares Sperrschaltmittel auf, das sowohl von einem von der Größe der Versorgungsspannung gesteuerten Schaltglied als auch von dem Komparator angesteuert werden kann. Beim Einschalten der Versorgungsspannung wird das Schaltglied schon bei einer geringen Spannung, die nur einen Bruchteil der Nenn-Versorgungsspannung ausmacht, durchgeschaltet, wodurch das steuerbare Sperrschaltmittel der Verriegelungsschaltung in einen die Zündendstufe Sperrenden Zustand versetzt wird. Damit liegt bereits eine Fehlauslösungen verhindernde Sperrung vor, bevor die Versorgungsspannung auf einen Wert angestiegen ist, der eine Funktion der übrigen Komponenten des Sicherheitssystems ermöglicht. Stellt die Unterspannungserkennungsschaltung eine genügend hohe Versorgungsspannung fest, so wird nach Ablauf der Sperrzeit ein Power-On-Reset auf den Reset-Eingang der Recheneinheit gegeben und gleichzeitig das Schaltglied derart umgesteuert, daß nunmehr der die Verriegelung der Zündendstufe herbeiführende Schaltzustand des Sperrschaltmittels aufgehoben werden würde, sofern auch am Ausgang des Komparators ein entsprechendes Signal zur Verfügung gestellt wird. Letzteres ist jedoch nicht der Fall, da der Reset-Impuls an dem Reset-Eingang der Recheneinheit zu einem derartigen Zustand am Sperranschluß der Recheneinheit führt, daß die Spannung des Kondensators des R/C-Glieds kleiner als die Referenzspannung ist. Mithin nimmt der Komparator an seinem Ausgang einen Zustand ein, der das Sperrschaltmittel derart ansteuert, daß eine Verriegelung der Zündendstufe vorliegt. Erst nach einer von der Zeitkonstante des R/C-Glieds abhängigen Zeitspanne nach Auftritt des Reset-Impulses schaltet der Komparator derart um, daß eine Entriegelung der Zündendstufe vorliegt. Der Umschaltvorgang wird durch das Aufladen des Kondensators bewirkt, denn sobald dieser das durch die Referenzspannung vorgegebene Potential überschreitet, nimmt der Komparator seinen entsprechend anderen Schaltzustand ein. Allerdings ist es -nach einen anderen Ausführungsbeispiel der Erfindung- durchaus möglich, daß am Sperranschluß der Recheneinheit im Normalbetrieb des Sicherheitssystems ein Potential vorgegeben wird, das stets zu einer eine Verriegelung der Zündendstufe bewirkenden Komparator-Ansteuerung führt. Diese Verriegelung wird -wie bereits beschrieben- nur im Falle einer gewollten Auslösung, das heißt, einer Ansprache des Auslösesensors nach Ablauf der erfindungsgemäßen Verriegelungs-Freigabezeit aufgehoben, wobei während der Verriegelungs-Freigabezeit erfindungsgemäß eine Prüfung auf den korrekten Zustand der beteiligten Systemkomponenten erfolgt.

Die Erfindung wird im folgenden anhand der Figuren näher erläutert. Es zeigen:
Figur 1 ein Blockschaltbild eines Insassen-Sicherheitssystems und
Figur 2 eine Detaildarstellung der Anordnung gemäß Figur 1.

### Beschreibung des Ausführungsbeispiels

Das erfindungsgemäße Insassen-Sicherheitssystem für Fahrzeuge weist einen Auslösesensor 1 auf, der an eine Recheneinheit 2 angeschlossen ist. Die Recheneinheit 2 steht mit einer Unterspannungserkennungsschaltung 3 in Verbindung. Ferner ist eine Sperrschaltung 21 vorgesehen, die an eine Zündendstufe 5 angeschlossen ist. Die Zündendstufe 5 dient der Auslösung des Insassen-Sicherheitssystems, das beispielsweise als Airbag ausgebildet ist. Die Zündendstufe 5 steuert demgemäß eine Zündpille eines Treibsatzes des Airbags an.

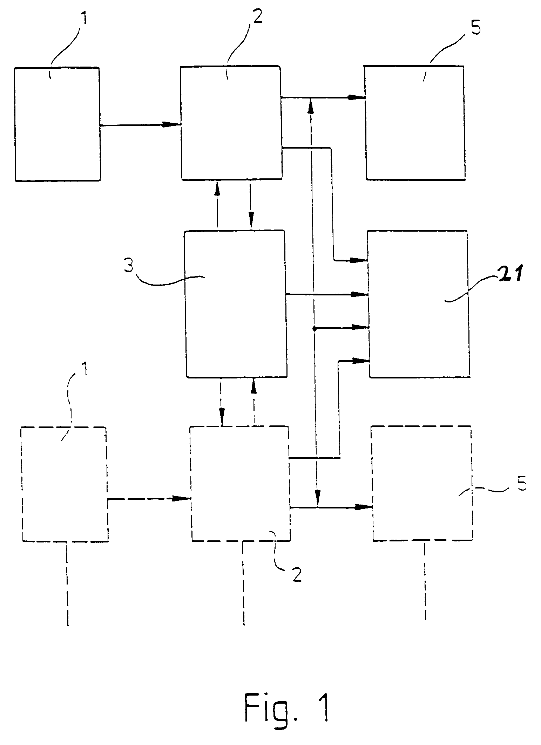

Je nach Ausführung des Insassen-Sicherheitssystems ist es durchaus möglich, daß mehrere Auslösesensoren, Recheneinheiten, Zündendstufen usw. vorgesehen sind. Dieses ist in der Figur 1 in gestrichelter Darstellung angedeutet.

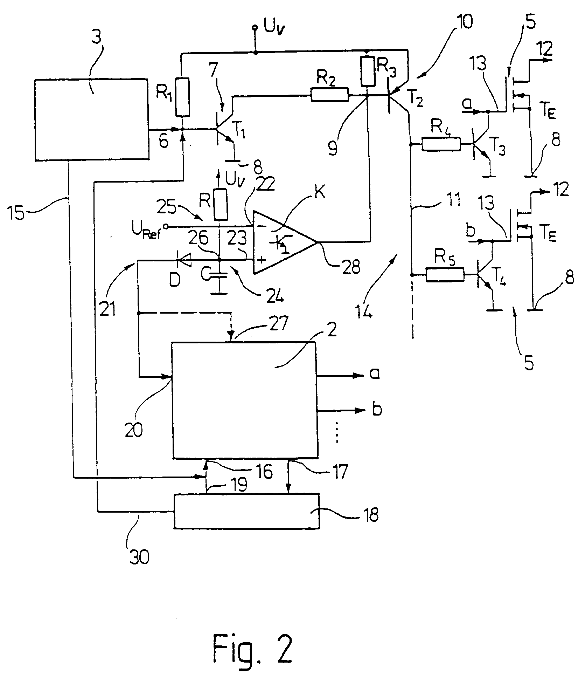

Figur 2 zeigt, daß die Unterspannungsversorgungsschaltung 3 einen Ausgang 6 aufweist, der ein Schaltglied 7 ansteuert. Das Schaltglied 7 ist als Transistor T₁ ausgebildet. Die Basis des Transistors T₁ ist über einen Widerstand R₁ an den Pluspol einer Versorgungsspannung Uᵥ angeschlossen. Der Emitter des Transistors T₁ liegt an dem anderen Pol der Versorgungsspannung Uᵥ, der durch Masse 8 gebildet wird.

Ein Verbindungspunkt 9 ist mit dem Kollektor des Transistors T₁ über eine Widerstand R₂ verbunden. Ferner ist zwischen dem Verbindungspunkt 9 und dem Pluspol der Versorgungsspannung Uᵥ ein weiterer Widerstand R₃ geschaltet. Der Verbindungspunkt 9 steht ferner mit dem Steueranschluß eines steuerbaren Sperrschaltmittels 10 in Verbindung, das als Transistor T₂ ausgebildet ist. Der Steueranschluß wird von der Basis des Transistors T₂ gebildet. Der Emitter des Transistors T₂ ist an dem Pluspol der Versorgungsspannung Uᵥ angeschlossen, während dessen Kollektor zu einer Verteilerleitung 11 führt.

In der Figur 2 sind zwei Zündendstufen 5 dargestellt, die Endstufen-Transistoren T_{E} aufweisen. Die Schaltstrecken der Endstufen-Transistoren 5 liegen jeweils mit einem Anschluß an Masse 8 und mit dem jeweiligen anderen Anschluß 12 an nicht dargestellten Zündpillen des Airbag-Systems. Die Steueranschlüsse 13 sind mit Ansteuerausgängen a bzw. b der Recheneinheit 2 verbunden. Ferner liegen die Steueranschlüsse 13 an den jeweiligen Kollektoren der Transistoren T₃ und T₄ an, deren Emitter an Masse 8 geschaltet sind. Die jeweiligen Basen der Transistoren T₃ und T₄ sind über Widerstände R₄ bzw. R₅ an die Verteilerleitung 11 angeschlossen. Die Transistoren T₂, T₃ und T₄ gehören -mit Ihren Beschaltungsgliedern- einer Verriegelungsschaltung 14 an.

Ein Ausgang 15 der Unterspannungserkennungsschaltung 3 führt zu einem Reset-Eingang 16 der Recheneinheit 2. Diese besitzt einen Ausgang 17, der zu einer Fenster-Watchdog-Schaltung 18 führt. Mit einem Ausgang 19 der Fenster-Watchdog-Schaltung 18 ist der Reset-Eingang 16 der Recheneinheit 2 verbunden. Ein weiterer Ausgang 30 der Fenster-Watchdog-Schaltung 18 führt zur Basis des Transistors T₁.

Die Recheneinheit 2 weist ferner einen Sperranschluß 20 auf, an den eine Sperrschaltung 21 angeschlossen ist. Diese weist einen Komparator K auf, dessen einer, erster Eingang 22 an eine Referenzspannung U_{Ref} angeschlossen ist und dessen anderer, zweiter Eingang 23 zu einer Zeitkonstanten-Schaltung 24 führt. Die Zeitkonstanten-Schaltung 24 wird von einem R/C-Glied 25 gebildet, das einen Widerstand R und einen Kondensator C aufweist. Der Widerstand R ist mit seinem einen Anschluß an den Pluspol der Versorgungsspannung Uᵥ um mit seinem anderen Anschluß an einen Verbindungspunkt 26 angeschlossen, an dem auch der eine Anschluß des Kondensators C liegt. Der andere Anschluß des Kondensators C steht mit Masse 8 in Verbindung. An den Verbindungspunkt 26 ist ferner eine Diode D mit ihrer Anode angeschlossen. Die Kathode der Diode D führt zum Sperranschluß 20. Der Sperranschluß 20 kann ferner mit einem Interrupt-Anschluß 27 verbunden sein. Dieses ist in der Figur 2 gestrichelt angedeutet. Der Ausgang 28 des Komparators K ist an den Verbindungspunkt 9 angeschlossen.

Das erfindungsgemäße Insassen-Sicherheitssystem arbeitet folgendermaßen:
Beim Einschalten der Versorgungsspannung Uᵥ wird der Transistor T₁ schon bei einem sehr geringen Spannungsniveau (Uᵥ<1V) durchgeschaltet. Der Transistor T₁ steuert über seinen Kollektor und den Widerstand R₂ die Basis des Transistors T₂ derart an, daß auch dieser seinen leitenden Zustand einnimmt. Dieses führt zu einer Ansteuerung der Transistoren T₃ und T₄ usw. (es können noch weitere an die Verbindungsleitung 11 angeschlossene Transistoren vorgesehen sein, die entsprechende Zündendstufen 5 ansteuern). Durch die Ansteuerung werden die Transistoren T₃ und T₄ in ihre leitenden Zustände versetzt, so daß die Steueranschlüsse 13 der Endstufen-Transistoren T_{E} Massepotential annehmen. Dieses bewirkt eine Sperrung der Endstufen-Transistoren; mithin liegt eine Verriegelung der Zündendstufen 5 vor, so daß keine Aktivierung des Insassen-Sicherheitssystem erfolgen kann. Sofern also nach dem Einschalten der Versorgungsspannung Uᵥ und dem damit einhergehenden Spannungsanstieg undefinierte Zustände in den Komponenten (z.B. in deren integrierten Schaltkreisen) auftreten, so daß an den Ansteuerausgängen a, b Fehlimpulse auftreten, die zu einer das Insassen-Sicherheitssystem auslösenden Ansteuerung der Steueranschlüsse 13 der EndstufenTransistoren T_{E} führen, wird aufgrund des erfindungsgemäßen Schutzes keine Wirkung erzielt, da die Ansteuerimpulse über die leitenden Transistoren T₃, T₄ nach Masse abgeleitet werden.

Stellt die Unterspannungserkennungsschaltung 3 eine Unterspannung fest, so herrscht ein statischer Reset-Zustand. Liegt eine genügend hohe Versorgungsspannung Uᵥ vor, so wird nach dem Überschreiten einer vorgebbaren Schwelle von einer Zeitschaltung während einer Sperrzeit ein Power-On-Reset-Impuls gestartet. Nach Ablauf der Sperrzeit tₛ wird der Dauer-Reset weggenommen, der solange eine Verriegelung der Zündendstufe bewirkt hat. Gleichzeitig wird über den Ausgang 6 der Unterspannungserkennungsschaltung 3 die Basis des Transistors T₁ derart angesteuert, daß dieser seinen gesperrten Zustand annimmt. Damit würden auch die Transistoren T₃ und T₄ über den Transistor T₂ in ihre Sperrzustände versetzt werden, was jedoch aufgrund des am Ausgang 28 des Komparators K anliegenden, dem Verbindungspunkt 9 zugeführten Potential -wie nachstehend näher ausgeführt- verhindert wird.

Aufgrund des Power-On-Reset-Impulses am Reset-Eingang 16 wird auch der Sperranschluß 20 der Recheneinheit 2 betätigt. Der Sperranschluß 20 nimmt Massepotential an. Da der Kondensator C der Zeitkonstanten-Schaltung 24 über den Widerstand R von der Versorgungsspannung Uᵥ -je nach Zeitkonstante- auf einen bestimmten Wert aufgeladen worden ist, erfolgt über die Diode D aufgrund des "auf Masse Schaltens" des Sperranschlusses 20 eine Schnellentladung des Kondensators C, so daß das Potential am zweiten Eingang 23 des Komparators K kleiner als das durch die Referenzspannung U_{Ref} am ersten Eingang 22 vorgegebene Potential ist. Hierdurch wird der Komparator K durchgeschaltet, das heißt, sein Ausgang 28 liegt auf Masse 8. Mithin verbleibt -wie oben bereits angedeutet- der Transistor T₂ in seinem leitenden Zustand, obwohl der Transistor T₁ in seinen Sperrzustand überführt wurde. Die Folge hiervon ist, daß die Sperrung der Endstufen-Transistoren T_{E} aufrecht erhalten bleibt. Nach seiner geschilderten Entladung wird der Kondensator C über den Widerstand R erneut aufgeladen, so daß das Potential am zweiten Eingang des Komparators K langsam ansteigt. Der Sperranschluß 20 nimmt nach Abklingen des Power-On-Reset-Impulses seinen "HIGH" - Zustand an, so daß die Diode D sperrt und eine Entladung des Kondensators C verhindert wird. Sobald das Potential am zweiten Eingang 23 größer als die Referenzspannung U_{Ref} des ersten Eingangs 22 wird, schaltet der Komparator K derart um, daß der von ihm angesteuerte Transistor T₂ in seinen Sperrzustand versetzt wird. Damit werden auch die Transistoren T₃ und T₄ in ihre Sperrzustände überführt, so daß die Steueranschlüsse 13 der Endstufentransistoren T_{E} nicht mehr auf Masse 8 liegen. Sofern jetzt über die Ansteuerausgänge a, b der Recheneinheit 2 die Zündendstufen 5 angesteuert werden, erfolgt eine Auslösung des Insassen-Sicherheitssystems. Die Zeit der zuvor beschriebenen Wiederaufladung des Kondensators C bis zu dem Punkt, an dem der Komparator K umschaltet, stellt somit erfindungsgemäß eine Verriegelungs-Freigabezeit tᵥ dar, die eine Sperrung der Zündendstufen 5 bewirkt. Die Zeitkonstante des R/C-Glieds 25, die die Verriegelungs-Freigabezeit tᵥ bestimmt, ist erfindungsgemäß derart gewählt, daß sie kleiner als eine Ansprechzeit tₐ des Auslösesensors 1 ist. Der Auslösesensor 1 oder die Auslösesensoren 1 (in einem System können auch mehrere derartige Sensoren vorgesehen sein) erfaßt nach dem hier beschriebenen Ausführungsbeispiel die Beschleunigung des zugehörigen Fahrzeuges, die in einer oder mehreren digitalen oder analogen Recheneinheiten (nicht dargestellt) verarbeitet wird. Liegt z. B. ein aufintegrierter Beschleunigungswert in hinreichender Größe vor, so ist das Auslösekriterium für das Insassen-Sicherheitssystem erfüllt. Die Folge ist eine Ansteuerung über die Ansteuerausgänge a, b der Recheneinheit. Der Auswertevorgang des Auslösesensors 1 (z.B. die genannte Integration der Beschleunigung) bringt eine Ansprechzeit tₐ mit sich, die erfindungsgemäß größer sein muß, als die zuvor erwähnte Verriegelungs-Freigabezeit tᵥ. Nur so ist gewährleistet, daß im Auslösezeitpunkt die Sperrung der Zündendstufen 5 mittels der Transistoren T₃ und T₄ aufgehoben ist. Während der Verriegelungs-Freigabezeit tᵥ findet erfindungsgemäß eine Prüfung der Komponenten des Insassen-Sicherheitssystems statt um zu erkennen, ob nicht aufgrund eines Störfalles (z. B. durch einen undefinierten Zustand einer integrierten Schaltung) eine Fehlauslösung herbeigeführt werden würde. Aufgrund der erfindungsgemäßen Verriegelungs-Freigabezeit tᵥ ist somit durch die zeitverzögerte Freigabe noch für eine bestimmte Zeitspanne ein rettendes Eingreifen möglich. Wenn z. B. eine Komponente des Systems (vorzugsweise ein Mikrocomputer) den Störfall der fälschlich stimmulierten Recheneinheit 2 erkennt, so kann rechtzeitig (innerhalb der Verriegelungs-Freigabezeit tᵥ) eine Auslösung unterbunden werden, indem das ganze System in einen Reset-Zustand versetzt wird.

Für eine Funktionskontrolle weist das Sicherheitssystem überdies die Fenster-Watchdog-Schaltung 18 auf. Diese muß in ganz bestimmten Abständen (Zeitfenster) vorzugsweise periodisch getriggert werden, damit an ihrem Ausgang 19 kein Reset-Impuls auftritt. Die Triggerung wird von der Recheneinheit 2 durchgeführt und erfolgt nur dann vorschriftsmäßig, wenn ein korrekter Programmablauf vorliegt. Dieses bedeutet, daß Störungen, die zum Ausbleiben oder einer Abgabe von Triggerimpulsen führen, die außerhalb der Zeitfenster liegen, zu einem an dem Reset-Eingang 16 anliegenden Reset-Impuls der Fenster-Watchdog-Schaltung 18 führen, so daß eine Sperrung der Zündendstufen 5 vorliegt, wie dieses bereits für den Fall des Einschaltens der Versorgungsspannung Uᵥ im vorstehenden erklärt wurde.

Nach einer Variante kann die Recheneinheit 2 einen Interrupt-Anschluß 27 aufweisen, der mit dem Sperranschluß 20 verbunden ist. Hierdurch kann eine Freigabe der Endstufen-Verriegelung, die dadurch erfolgt, daß der Sperranschluß "HIGH"-Zustand annimmt, direkt auf den Interrupt-Anschluß 27 gegeben werden, wodurch eine Überprüfungsroutine gestartet wird, um aufzudecken, ob die Freigabe der Endstufen-Verriegelung begründet erfolgt ist. Insbesondere ist vorgesehen, daß durch Ansteuerung des Interrupt-Anschlusses 27 eine bestimmte Programmstelle angesteuert wird, so daß die genannte Überprüfung erfolgen kann.

Aufgrund der erfindungsgemäßen Ausbildung werden somit Fehlauslösungen aufgrund von nicht definierten Hardware-Zuständen während des Ein- und Ausschaltens der Versorgungsspannung sowie Fehlfunktionen oder Störungen in einer oder mehreren Recheneinheiten verhindert. Für den Ein- bzw. Ausschaltfall ist zunächst eine Sperrung aufgrund der vorliegenden Unterspannung vorgesehen, die solange aufrechterhalten bleibt, bis die Versorgungsspannung eine vorgebbare Schwelle überschreitet. Doch auch nach Überschreiten dieser Schwelle erfolgt noch keine Freigabe der Zündendstufe 5, da zunächst die Sperrzeit tₛ abgelaufen sein muß. Dieses bietet eine zusätzliche Sicherheit. Doch auch nach Ablauf der Sperrzeit tₛ erfolgt keine Freigabe der Zündendstufe 5, da zunächst die erfindungsgemäße Sperrschaltung 4 ihre Tätigkeit aufnimmt. Die bis zu einer Freigabe der Zündendstufen 5 stets ablaufende Verriegelungs-Freigabezeit tᵥ wird dazu genutzt, um unzulässige Betriebszustände oder Störungen zu erfassen und gegebenenfalls trotz der (unzulässigerweise) vorliegenden Ansteuersignale an den Ansteuerausgängen a, b eine Auslösung des Sicherheitssystems zu verhindern.

Die Erfindung ist jedoch nicht nur auf die Betriebsphase während des Ein- und Ausschaltens der Versorgungsspannung Uᵥ beschränkt, sondern es kann auch während des Normalbetriebs stets eine Endstufen-Verriegelung vorgesehen sein. Dieses erfolgt dadurch, daß nach Ablauf des Einschaltvorganges am Sperranschluß 20 der "Low"-Zustand erhalten bleibt, so daß der Komparator K zum Sperrzustand der Verriegelungsschaltung 14 führt. Soll der Normalbetrieb verlassen werden (z. B. durch eine crash-bedingte Auslösung, ein Endstufen-Prüfzyklus oder dergleichen), so ist die Verriegelung von allen Zugreifenden so frühzeitig zu lösen, daß zum Zündzeitpunkt die aufgrund der erfindungsgemäßen Verriegelung-Freigabezeit tᵥ vorliegende Zeitverzögerung zur Entriegelung abgelaufen ist. Nach Ablauf der Ansprechzeit tₐ des Auslösesensors 1 muß die Freigabe der Endstufen 5 für die Zündung des Sicherheitssystems erfolgt sein. Während des Ablaufes der Verriegelungs-Freigabezeit tᵥ erfolgt die geschilderte Prüfung im Hinblick auf Störungen, die eine Fehlauslösung beiführen könnten.

Zu der bereits beschriebenen Fenster-Watchdog-Schaltung 18 ist noch anzumerken, daß die Auslösung eines System-Resets wegen ausbleibender oder nicht in den Zeitfenstern liegender Trigger-Impulse eher geschehen muß, als der Ablauf der Verriegelungs-Freigabezeit tᵥ, damit rechtzeitig eine Fehlauslösung des Sicherheitssystems unterbunden werden kann.

Sofern beispielsweise in der Recheneinheit 2 eine Störung oder ein Fehler vorliegt, so ist während des Ablaufes der erfindungsgemäßen Verriegelungs-Freigabezeit tᵥ ein Konfiguration zur Herbeiführung des korrekten Zustandes möglich, so daß Fehlzustände, die an den Ansteuerausgängen a, b vorliegen rechtzeitig zur Vermeidung einer Fehlauslösung behoben sind.

Insbesondere durch die Kombination der vorstehend beschriebenen Einzelsicherheitsmaßnahmen ist es möglich, bei einem Insassen-Sicherheitssystem nahezu alle auftretenden und denkbaren Betriebszuständen sicher zu überwachen und Fehlauslösungen zu verhindern.

## Patentansprüche

1. Insassen-Sicherheitssystem für Fahrzeuge, insbesondere Rückhaltesystem, wie Airbag, Gurtstraffer usw., mit mindestens einem eine Ansprechzeit aufweisenden Auslösesensor (1), einer Recheneinheit (2) und einer Zündendstufe (5) zur Aktivierung des Sicherheitssystems, **gekennzeichnet durch** eine von der Recheneinheit (2) steuerbare Sperrschaltung (21), die erst nach Ablauf einer Verriegelungs-Freigabezeit (tᵥ) die Zündendstufe (5) entriegelt, wobei die Verriegelungs-Freigabezeit (tᵥ) kleiner als die Ansprechzeit (tₐ) des Auslösesensors (1) ist.

2. Sicherheitssystem nach Anspruch 1, **dadurch gekennzeichnet**, daß die VerriegelungsFreigabezeit (tᵥ) größer als eine Intervallzeit einer Überwachungsschaltung (insbesondere eine weitere Recheneinheit, eine Fenster-Watchdog-Schaltung) ist.

3. Sicherheitssystem nach einem der vorhergehenden Ansprüche, **gekennzeichnet durch** eine Unterspannungserkennungsschaltung (3), die bereits bei einem Bruchteil der Nenn-Versorgungsspannung (U_{v nenn}) des Sicherheitssystems arbeitet und die Zündendstufe (5) solange verriegelt, bis die Versorgungsspannung (Uᵥ) eine die Funktionsfähigkeit der gesamten Schaltungsanordnung sicherstellende Schwelle überschritten hat.

4. Sicherheitssystem nach einem der vorhergehenden Ansprüche, **dadurch gekennzeichnet**, daß die Unterspannungserkennungsschaltung (3) die Verriegelung der Zündendstufe (5) solange aufrecht erhält, bis im Anschluß an das Überschreiten der Schwelle eine Sperrzeit (tₛ) abgelaufen ist.

5. Sicherheitssystem nach einem der vorhergehenden Ansprüche, **dadurch gekennzeichnet**, daß nach Ablauf der Sperrzeit (tₛ) die Recheneinheit (2) die durch die Sperrschaltung (21) bewirkte Zündendstufen-Verriegelung übernimmt.

6. Sicherheitssystem nach einem der vorhergehenden Ansprüche, **dadurch gekennzeichnet**, daß die Recheneinheit (2) einen die Sperrschaltung (21) steuernden Sperranschluß (20) aufweist.

7. Sicherheitssystem nach einem der vorhergehenden Ansprüche, **dadurch gekennzeichnet**, daß die Recheneinheit (2) einen Reset-Eingang (16) aufweist und beim Anlegen eines Reset-Impulses an den Reset-Eingang (16) den Sperranschluß (20) in seinen Verriegelungszustand versetzt.

8. Sicherheitssystem nach einem der vorhergehenden Ansprüche, **dadurch gekennzeichnet**, daß der Sperranschluß (20) mit einem Interrupt-Anschluß (27) der Recheneinheit (2) verbunden ist.

9. Sicherheitssystem nach einem der vorhergehenden Ansprüche, **dadurch gekennzeichnet**, daß der Ausgang (15) der Unterspannungserkennungsschaltung (3) mit dem Reset-Eingang (16) verbunden ist.

10. Sicherheitssystem nach einem der vorhergehenden Ansprüche, **gekennzeichnet durch** eine Fenster-Watchdog-Schaltung (18) die von der Recheneinheit (2) getriggert wird und mit dem Reset-Eingang (16) verbunden ist.

11. Sicherheitssystem nach einem der vorhergehenden Ansprüche, **dadurch gekennzeichnet**, daß die Fenster-Watchdog-Schaltung (18) einen weiteren Ausgang (30) aufweist, der bei Nichteinhaltung des Triggerfensters die Zündendstufe (5) sperrt und diese erst nach Ablauf der Sperrzeit (tₛ) wieder frei gibt.

12. Sicherheitssystem nach einem der vorhergehenden Ansprüche, **dadurch gekennzeichnet**, daß die Sperrschaltung (21) einen Komparator (K) aufweist, dessen einer, erster Eingang (22) an einer Referenzspannung (U_{Ref}) liegt und dessen anderer, zweiter Eingang (23) über einen Verbindungspunkt (26) an den Sperranschluß (20) angeschlossen ist und daß an dem Verbindungspunkt (26) eine von der Versorgungsspannung (Uᵥ) gespeiste Zeitkonstanten-Schaltung (24) liegt.

13. Sicherheitssystem nach einem der vorhergehenden Ansprüche, **dadurch gekennzeichnet**, daß die Zeitkonstanten-Schaltung (24) von einem R/C-Glied (25) gebildet wird, dessen Widerstand (R) zwischen dem einen Pol der Versorgungsspannung (Uᵥ) und dem Verbindungspunkt (26) und dessen Kondensator (C) zwischen dem anderen Pol der Versorgungsspannung (Uᵥ) und dem Verbindungspunkt (26) liegt.

14. Sicherheitssystem nach einem der vorhergehenden Ansprüche, **dadurch gekennzeichnet**, daß der Ausgang (28) des Komparators (K) an eine die Zündendstufe (5) ansteuernde Verriegelungs-Schaltung (14) angeschlossen ist.

15. Sicherheitssystem nach einem der vorhergehenden Ansprüche, **dadurch gekennzeichnet**, daß die Verriegelungs-Schaltung (14) ein steuerbares Sperrschaltmittel (10) aufweist, das von einem von der Größe der Versorgungsspannung (Uᵥ) gesteuerten Schaltglied (7) und von dem Komparator (K) angesteuert wird.

## Claims

1. Vehicle-occupant safety system for vehicles, in particular a restraining system, such as an airbag, a seat-belt pretensioning device etc., having at least one trigger sensor (1) which has a response time, one computing unit (2) and one firing output stage (5) for activating the safety system, characterized by a blocking circuit (21) which can be controlled by the computing unit (2) and which does not unlock the firing output stage (5) until a release of locking time (tᵥ) has elapsed, the release of locking time (tᵥ) being smaller than the response time (tₐ) of the trigger sensor (1).

2. Safety system according to Claim 1, characterized in that the release of locking time (tᵥ) is longer than an interval time of a monitoring circuit (in particular a further computing unit, a window watchdog circuit).

3. Safety system according to one of the preceding claims, characterized by an undervoltage detection circuit (3) which operates even at a fraction of the rated supply voltage (U_{v rate}) of the safety system and locks the firing output stage (5) until the supply voltage (Uᵥ) has exceeded a threshold which safeguards the operational capability of the entire circuit arrangement.

4. Safety system according to one of the preceding claims, characterized in that the undervoltage detection circuit (3) maintains the locking of the firing output stage (5) until a blocking time (tₛ) has elapsed after the threshold is exceeded.

5. Safety system according to one of the preceding claims, characterized in that, after the blocking time (tₛ) has elapsed, the computing unit (2) assumes the locking of the firing output stages brought about by the blocking circuit (21).

6. Safety system according to one of the preceding claims, characterized in that the computing unit (2) has a blocking terminal (20) which controls the blocking circuit (21).

7. Safety system according to one of the preceding claims, characterized in that the computing unit (2) has a reset input (16) and, when a reset pulse is applied to the reset input (16), places the blocking terminal (20) in its locking state.

8. Safety system according to one of the preceding claims, characterized in that the blocking terminal (20) is connected to an interrupt terminal (27) of the computing unit (2).

9. Safety system according to one of the preceding claims, characterized in that the output (15) of the undervoltage detection circuit (3) is connected to the reset input (16).

10. Safety system according to one of the preceding claims, characterized by a window watchdog circuit (18) which is triggered by the computing unit (2) and is connected to the reset input (16).

11. Safety system according to one of the preceding claims, characterized in that the window watchdog circuit (18) has a further output (30) which blocks the firing output stage (5) when the trigger window is not observed and does not release the said firing output stage (5) again until the locking time (tₛ) has elapsed.

12. Safety system according to one of the preceding claims, characterized in that the blocking circuit (21) has a comparator (K) whose one, first input (22) is connected to a reference voltage (U_{Ref}) and whose other, second input (23) is connected via a connection point (26) to the blocking terminal (20), and in that a time constant circuit (24) which is fed by the supply voltage (Uᵥ) is connected to the connection point (26).

13. Safety system according to one of the preceding claims, characterized in that the time constant circuit (24) is formed by an R/C element (25) whose resistor (R) is connected between the one pole of the supply voltage (Uᵥ) and the connection point (26) and whose capacitor (C) is connected between the other pole of the supply voltage (Uᵥ) and the connection point (26).

14. Safety system according to one of the preceding claims, characterized in that the output (28) of the comparator (K) is connected to a locking circuit (14) which actuates the firing output stage (5).

15. Safety system according to one of the preceding claims, characterized in that the locking circuit (14) has a controllable blocking switching means (10) which is actuated by a switching element (7), controlled by the size of the supply voltage (Uᵥ), and by the comparator (K).

## Revendications

1. Dispositif de sécurité pour les occupants d'un véhicule, notamment dispositif de retenue tel que poche d'air (air-bag), raidisseur de ceinture, etc..., comportant au moins un capteur de déclenchement (1) présentant un temps de réponse, une unité de calcul (2) et un étage de déclenchement (5) pour activer le dispositif de sécurité, dispositif caractérisé par un circuit de blocage (21) commandé par l'unité de calcul (2) et qui ne déverrouille l'étage de déclenchement (5) qu'après un temps de libération de verrouillage (tᵥ), ce temps (tᵥ) étant inférieur au temps de réponse (tₐ) du capteur de déclenchement (1).

2. Dispositif de sécurité selon la revendication 1, caractérisé en ce que le temps de libération de verrouillage (tᵥ) est supérieur à un intervalle de temps d'un circuit de surveillance (notamment une autre unité de calcul, un circuit de surveillance de fenêtre de type Watchdog).

3. Dispositif de sécurité selon l'une des revendications précédentes, caractérisé par un circuit de détection de sous-tension (3) qui fonctionne déjà pour une fraction de la tension d'alimentation nominale (U_{v noM}) du dispositif de sécurité et verrouille l'étage de déclenchement (5) jusqu'à ce que la tension d'alimentation (Uᵥ) ait dépassé un seuil garantissant l'aptitude au fonctionnement de l'ensemble de l'installation.

4. Dispositif de sécurité selon l'une des revendications précédentes, caractérisé en ce que le circuit de reconnaissance de sous-tension (3) maintient le verrouillage de l'état de déclenchement (5) jusqu'à la fin d'un temps d'arrêt (tₛ) en liaison avec le dépassement du seuil.

5. Dispositif de sécurité selon l'une des revendications précédentes, caractérisé en ce qu'après la fin du temps de blocage (tₛ), l'unité de calcul (2) assure le verrouillage des étages de déclenchement assuré par le circuit de blocage (21).

6. Dispositif de sécurité selon l'une des revendications précédentes, caractérisé en ce que l'unité de calcul (2) comporte un branchement de blocage (20) qui commande le circuit de blocage (21).

7. Dispositif de sécurité selon l'une des revendications précédentes, caractérisé en ce que l'unité de calcul (2) comporte une entrée (16) de remise à l'état initial et lors de l'application d'une impulsion de remise à l'état initial à l'entrée de remise à l'état initial (16), la borne de blocage (20) passe à son état de verrouillage.

8. Dispositif de sécurité selon l'une des revendications précédentes, caractérisé en ce que la borne de blocage (20) est reliée à une borne d'interruption (27) de l'unité de calcul (2).

9. Dispositif de sécurité selon l'une des revendications précédentes, caractérisé en ce que la sortie (15) du circuit de détection de sous-tension (3) est reliée à l'entrée de remise à l'état initial (16).

10. Dispositif de sécurité selon l'une des revendications précédentes, caractérisé par un circuit de surveillance à fenêtre "watchdog" (18) déclenché par l'unité de calcul (2) et qui est relié à l'entrée de remise à l'état initial (16).

11. Dispositif de sécurité selon l'une des revendications précédentes, caractérisé en ce que le circuit de surveillance de fenêtre "watchdog" (18) comporte une autre sortie (30) qui bloque l'étage de déclenchement (5) lorsque la fenêtre de déclenchement n'est pas respectée et ne la libère qu'à la fin du temps de blocage (tₛ).

12. Dispositif de sécurité selon l'une des revendications précédentes, caractérisé en ce que le circuit de blocage (21) comporte un comparateur (K) dont une entrée (première entrée) (22) est reliée à une tension de référence (U_{Ref}) et dont l'autre entrée (seconde entrée) (23) est reliée par un point de liaison (26) à la borne de blocage (20) et en ce qu'un circuit à constante de temps (24) alimenté par la tension d'alimentation (Uᵥ) est relié au point de jonction (26).

13. Dispositif de sécurité selon l'une des revendications précédentes, caractérisé en ce que le circuit à constante de temps (24) est formé par un élément R/C (25) dont la résistance (R) est située entre un pôle de la tension d'alimentation (Uᵥ) et le point de connexion (26) et dont le condensateur (C) est branché entre l'autre pôle de la tension d'alimentation (Uᵥ) et le point de jonction (26).

14. Dispositif de sécurité selon l'une des revendications précédentes, caractérisé en ce que la sortie (28) du comparateur (K) est reliée à un circuit de verrouillage (14) commandant l'étage de déclenchement (5).

15. Dispositif de sécurité selon l'une des revendications précédentes, caractérisé en ce que le circuit de verrouillage (14) comporte un moyen de commutation de blocage (10), commandé, et qui reçoit un signal de commande d'un élément de commutation (7) commandé par l'amplitude de la tension d'alimentation (Uᵥ) et par le comparateur (K).
